# FASCICULE DE BREVET EUROPEEN

(11) **EP 3 691 190 B1**
(45) Date de publication et mention de la délivrance du brevet: **06.10.2021**
(21) Numéro de dépôt: 20153144.9
(22) Date de dépôt: 22.01.2020
(51) Int. Cl.: H04L 12/24, H04L 12/28, H04W 40/24, H04L 12/64, H04W 40/12

(54) **PROCÉDÉ DE COMMUNICATION AU SEIN D'UN RÉSEAU DE COMMUNICATION DYNAMIQUE ENTRE UNE PLURALITÉ DE PRODUITS**
KOMMUNIKATIONSVERFAHREN INNERHALB EINES DYNAMISCHEN KOMMUNIKATIONSNETZES ZWISCHEN EINER VIELZAHL VON PRODUKTEN
COMMUNICATION METHOD WITHIN A DYNAMIC COMMUNICATION NETWORK BETWEEN A PLURALITY OF PRODUCTS

(30) Priorité: 30.01.2019 FR 1900822
(43) Date de publication de la demande: 05.08.2020
(73) Titulaire: Ogga, 69003 Lyon (FR)
(72) Inventeur: GAGNAT, Stéphane, 69007 LYON (FR)
(74) Mandataire: Germain Maureau

(56) Documents cités:
- EP-A2- 1 324 532
- US-A1- 2008 247 408
- US-A1- 2015 085 668

## Description

### Domaine technique de l'invention

La présente invention concerne le domaine des réseaux de communication entre plusieurs objets ou produits à l'intérieur d'un bâtiment ou d'un regroupement de bâtiments, les bâtiments pouvant être destinés à une utilisation commerciale ou d'habitation.

### Contexte technologique de l'invention

Actuellement, le chauffage collectif est géré uniquement avec des informations provenant de la chaufferie ou de son local. Il est possible de contrôler le système de distribution de chauffage en se basant sur des mesures de température de départ de chauffage et de retour de chauffage, mais cette façon de procéder ne permet pas de régler les températures réelles dans les logements ou locaux d'un bâtiment ou d'une pluralité de bâtiments. Ainsi, comme la température de réglage de la chaufferie est classiquement déterminée en fonction du local ou du logement le plus défavorisé au niveau thermique, certains logements ou locaux sont surchauffés.

En général, il possible d'installer un thermostat ou une vanne thermostatique dans chaque logement ou local afin d'éviter ce problème de sur-chauffage. Cette solution permet de répondre aux attentes des occupants, mais ne donne pas satisfaction au bailleur puisque ce dernier, facture à l'identique les occupants, qui consomment différemment les uns des autres grâce aux dispositifs en place (thermostats ou vannes thermostatiques).

Sont connus les documents EP1324532, US2008/0247408 et US2015/0085668 qui décrivent des procédés de transmission d'un message sur un réseau de communication sans fil comportant une pluralité d'unités de communication.

Le document EP1324532 décrit un procédé de transmission d'un message sur un réseau de communication sans fil comportant une pluralité d'unités de communication comprenant une unité de communication en réception dans laquelle sont stockées des informations de topologie de réseau comportant elles-mêmes des informations identifiant des unités de communication voisines, formant un premier rang de voisins et des informations identifiant des unités de communication voisines des voisins du premier rang formant un second rang de voisins, le procédé comprenant la réception du message sur l'unité de communication en réception et la détermination du type de la technique de transmission à utiliser, et selon la détermination de l'utilisation d'une technique d'inondations « flood », la retransmission du message en réponse à la détermination que ladite unité de communication en réception communique avec au moins une unité voisine qui est isolée dans les communications avec les unités voisines restantes de ladite unité de communication en réception.

Le document US2008/0247408 décrit une méthode de diffusion de messages dans un réseau sans fil ayant une architecture arborescente. Lorsqu'un nœud reçoit un message de diffusion pour le rediffuser à d'autres nœuds du réseau, il établit une liste d'identifiants d'autres nœuds du réseau à partir desquels le nœud exige la réception d'un message de diffusion comme accusé de réception implicite que lesdits autres nœuds du réseau ont reçu ledit message de diffusion. Le nœud établit cette liste d'accusés de réception implicites sur la base de données stockées relatives à une topologie arborescente existante du réseau. Une fois cette liste établie, le nœud réémet le message diffusé. Chaque nœud du réseau exécute ce protocole de diffusion et, ce faisant, un message diffusé se propage rapidement et efficacement à travers le réseau avec un minimum de redondance et d'impact sur la topologie du réseau.

Le document US2015/0085668 décrit un procédé qui découvre des routes pour transférer des paquets de nœuds sources à des nœuds de destination dans un réseau sans fil, certaines sources voisines agissant comme nœuds de relais. Chaque source mesure un débit de réception de messages de commande à partir de chaque nœud voisin. Ensuite, les paquets de données sont transférés d'une source particulière à la destination par l'intermédiaire des nœuds voisins ayant un débit le plus bas.

Toutefois, ces documents ne permettent pas une gestion centralisée des équipements d'un même bâtiment ou d'un regroupement de bâtiments de manière à pouvoir contrôler chaque produit d'équipement indépendamment et d'en automatiser le contrôle de manière satisfaisante.

### Objet de l'invention

L'invention a pour but de remédier à tout ou partie des inconvénients précités et notamment à permettre une gestion des équipements centralisée d'un même bâtiment ou d'un regroupement de bâtiments de manière à pouvoir contrôler chaque produit d'équipement indépendamment et d'en automatiser le contrôle. À cet effet, l'invention a pour objet un procédé d'établissement d'un réseau de communication entre une pluralité de produits d'un même bâtiment ou d'un même regroupement de bâtiments, qui va permettre ledit contrôle de chaque produit et de centraliser les envois de données d'un produit à un autre.

Un objet de l'invention est donc objet un procédé de communication au sein d'un réseau de communication dynamique entre une pluralité de produits d'un même bâtiment ou d'un même regroupement de bâtiments, caractérisé en ce que chaque produit comprenant au moins un module radio, un processeur de traitement, le module radio étant configuré pour émettre et recevoir des données radio incluant au moins une donnée d'identifiant et au moins une donnée sur la qualité du signal radio, le module radio étant configuré pour émettre et recevoir lesdites données radio uniquement dans un périmètre de réception,
le procédé comprenant au moins une étape d'établissement du réseau de communication dynamique entre la pluralité de produits, l'étape d'établissement du réseau de communication étant réalisée automatiquement et comprenant les sous-étapes suivantes :
(a) chaque module radio de chaque produit de la pluralité de produits émet des données radio,
(b) le module radio d'un premier produit détecte des données radio émises en étape (a) dans le périmètre de réception du premier produit et les reçoit,
(c) le processeur de traitement du premier produit analyse les données radio reçues en étape (b) ; ledit procédé étant remarquable en ce qu'il comprend les sous-étapes suivantes :
(d) le processeur de traitement du premier produit sélectionne un produit parmi la pluralité de produits émetteurs dont les données radio émises en étape (a) ont été reçues par le premier produit en étape (b), le produit sélectionné étant sélectionné sur la base de l'analyse de la donnée de qualité du signal réalisée en étape (c), ledit produit sélectionné étant considéré comme le produit le plus éloigné c'est-à-dire le produit dont la qualité de réception du signal est la plus faible par rapport à toutes les données de qualité de signal reçues en étape (b) par le premier produit,
(e) le module radio du premier produit transmet au produit le plus éloigné sélectionné en étape (d) les données d'identifiants issues des données radio reçues en étape (b),
(f) en réponse, le module radio du produit le plus éloigné envoie au premier produit des données d'identifiants issues de données radio qui l'a lui-même détectées et reçues dans son périmètre de réception de la part de produits de la pluralité,
(g) le module radio du premier produit reçoit des données radio envoyées en étape (f),
(h) établissement du réseau de communication entre tous les produits du bâtiment ou du regroupement de bâtiments.

Selon l'invention, l'établissement dudit réseau est automatique et réalisé de manière simple, sans intervention de spécialistes informatique ou réseaux. Ainsi, il n'est pas nécessaire d'avoir une infrastructure dédiée dans le bâtiment ou dans le regroupement de bâtiment et l'établissement de ce réseau étant automatique, il peut être activable ou désactivable à tout moment facilement.

Dans la présente invention, on entend par « produit le plus éloigné », le produit dont la qualité de réception du signal est la plus faible tout en garantissant une bonne communication, et ce quelle que soit sa géolocalisation.

Selon une caractéristique de l'invention, le procédé comprend en outre une étape de communication dans laquelle un ou plusieurs produits communiquent entre eux via le réseau de communication établi lors de l'étape d'établissement de réseau.

Selon une première configuration du procédé selon l'invention, dans l'étape (f) le produit le plus éloigné envoie la totalité des données d'identifiants issues de données radio qui l'a lui-même détectées et reçues dans son périmètre de réception de la part de produits de la pluralité et dans l'étape (g) le module radio du premier produit reçoit la totalité des données radio envoyées en étape (f).

Selon une deuxième configuration du procédé selon l'invention, dans l'étape (f) le produit le plus éloigné envoie une partie des données d'identifiants issues de données radio qui l'a lui-même détectées et reçues dans son périmètre de réception de la part de produits de la pluralité et dans l'étape (g) le module radio du premier produit reçoit la totalité des données radio envoyées en étape (f).

Selon la deuxième configuration, le procédé comprend une étape (e1) postérieure à l'étape (e) et antérieure à l'étape (f) selon laquelle : le processeur de traitement du produit le plus éloigné compare les données d'identifiants transmises en étape (e) avec les données d'identifiants récoltées issues de données radio que le module radio du produit le plus éloigné a lui-même détectées et reçues dans son périmètre de réception de la part de produits de la pluralité :
- si les données d'identifiants reçues en étape (e) sont identiques aux données d'identifiants issues de données radio dans le périmètre de réception du produit le plus éloigné alors, dans une étape (e2) le produit le plus éloigné envoie la totalité des données d'identifiants issues de données radio dans son périmètre de réception,
- si les données d'identifiants reçues en étape (e) sont différentes des données d'identifiants issues de données radio dans le périmètre de réception du produit le plus éloigné alors, dans une étape (e3), le processeur de traitement du produit le plus éloigné identifie les données d'identifiants inconnues du premier produit parmi les données d'identifiants issues de données radio détectées dans son périmètre de réception, et envoie en étape (f) uniquement les données d'identifiants inconnues.

Selon l'invention, l'établissement du réseau de communication grâce au procédé est plus rapide en utilisation la première configuration que la deuxième configuration car aucun tri préalable des données d'identifiants n'est réalisé. Néanmoins, la deuxième configuration a pour avantage d'utiliser moins de bande passante puisque les données transmises sont moins nombreuses.

Quelle que soit la configuration du procédé selon l'invention, le procédé comprend une étape (g1) réalisée entre l'étape (g) et l'étape (h) dans laquelle le processeur de traitement du premier produit compare les données d'identifiants reçues en étape (g) avec les données d'identifiants issues des données radio reçues en étape (b) :
- si les données d'identifiants reçues en étape (g) sont identiques aux données d'identifiants reçues en étape (b) alors le premier produit a connaissance de l'ensemble des produits du bâtiment ou du regroupement de bâtiment et le réseau de communication est établi (étape (h)),
- si les données d'identifiants reçues en étape (g) sont différentes des données d'identifiants reçues en étape (b) alors :
   (g1.1) le premier produit enregistre les données d'identifiants différentes,
   (g1.2) le processeur de traitement du premier produit crée une liste de nouvelles données d'identifiants, dites données d'identifiants n+1, à partir des données d'identifiants reçues en étape (b), dites données d'identifiants n, et des données d'identifiants reçues en étape (g),
   (g1.3) le module radio du premier produit transmet au produit le plus éloigné les données d'identifiants n+1,
   (g1.4) réitération des sous-étapes (f), (g), (g1), (g1.1), (g1.2), (g1.3), (g1.4) tant que les données d'identifiants reçues en étape (g) sont différentes des données d'identifiants reçues en sous-étape (b).

De cette façon, chaque produit détient la liste des données d'identifiants unique constituant la pluralité de produits d'un bâtiment ou d'un regroupement de bâtiment, avec leur distance radio. De plus, chaque produit de la pluralité de produits connaît le chemin radio le plus court pour se connecter à un autre produit de la pluralité de produits.

Selon une caractéristique de l'invention, avant de sélectionner un produit le plus éloigné en sous-étape (d), le processeur de traitement du premier produit classe les données radio en fonction de leur qualité de signal.

Selon une caractéristique de l'invention, l'étape (a) d'émission de données radio est réalisée en continu ou à intervalles réguliers et/ou à intervalles déterminés.

Selon une caractéristique de l'invention, si un nouveau produit vient à intégrer la pluralité, le nouveau produit émet des données radio, au moins une donnée identifiant et une donnée de qualité de signal, lors de sa mise en route.

Selon une caractéristique de l'invention, en sous-étape (b) chaque module radio de chaque produit détecte des données radio émises en étape (a) dans son périmètre de réception et les reçoit.

Selon une caractéristique de l'invention, le procédé de communication comprend en outre une étape de mise à jour de l'étape de l'établissement par réitération des sous-étapes (a) à (h).

Selon une caractéristique de l'invention, l'étape de mise à jour est réitérée régulièrement. Ainsi, il est possible de savoir en temps réel si un ou plusieurs produits sont ajoutés ou retirés du réseau.

Selon une caractéristique de l'invention, l'étape de mise à jour est activable et désactivable manuellement ou automatiquement par une unité de gestion.

Selon une caractéristique de l'invention, l'étape de mise à jour est paramétrable.

Selon une caractéristique de l'invention, lorsqu'un produit parmi la pluralité de produits, par exemple le premier produit, est connecté à un réseau externe identifié et autorisé, par exemple à internet, le produit connecté devient porte-parole des autres produits de la pluralité.

Avantageusement, il peut y avoir autant de produits porte-parole que de produits dans la pluralité. Dans ce cas, chaque produit communique avec le produit porte-parole le plus proche.

Dans la présente invention, on entend par « produit le plus proche », le produit dont la qualité de réception du signal est la plus forte tout en garantissant une bonne communication, et ce quelle que soit sa géolocalisation.

Selon une caractéristique de l'invention, le produit porte-parole est configuré pour centraliser l'ensemble des données radio de la pluralité et pour contrôler par une unité de gestion externe les autres produits de la pluralité.

Avantageusement, la pluralité de produits comprend un seul et unique produit porte-parole. Avantageusement, le produit porte-parole est configuré pour propager à la pluralité de produits son statut de porte-parole.

Selon une caractéristique de l'invention, le produit porte-parole s'identifie auprès des autres produits de la pluralité comme porte-parole. Cette configuration permet de répondre aux problématiques de réglementation en maitrisant le produit qui sera porte-parole via une connexion internet dédiée et sécurisée par exemple.

Selon une caractéristique de l'invention, la communication entre les produits de la pluralité peut être cryptée.

Afin d'optimiser l'utilisation de la bande passante, il possible de faire transiter les données radio par un nombre limité de produits pour rejoindre le produit porte-parole avec le moins d'utilisation de la bande passante.

A l'intérieur de la communauté, les produits peuvent diffuser des données radio dédiées aux autres produits de la pluralité, comme par exemple la date, l'heure, une température, une alarme.

Selon une caractéristique de l'invention, un produit de la pluralité peut diffuser une donnée radio à destination d'un seul des autres produits ou uniquement au produit porte-parole. Dans ce dernier cas, les autres produits ignorent la donnée radio transmise et ne la relayent pas ou la relayent sans la décrypter.

Avantageusement, chaque communauté de produits peut avoir son propre cryptage, illisible pour les autres communautés de produits.

L'invention a également pour objet un bâtiment ou un regroupement de bâtiments comprenant une pluralité de produits.

Les produits de la pluralité sont regroupés en au moins une communauté de produits, chaque produit de la communauté étant intégré au réseau de communication selon l'invention, et chaque produit de la communauté étant configuré pour communiquer entre eux par le procédé de communication selon l'invention.

Selon une caractéristique de l'invention, la pluralité de produits peut comprendre une pluralité de communautés fermées de produits. On indique alors au produit porte-parole les identifiants des produits membres de telles ou telle communauté fermée. Dans le cas de communautés fermées, les données radio transmises ne sont prises en compte que par les produits de la communauté. Par exemple, deux bâtiments voisins peuvent avoir deux communautés distinctes qui ne communiquent pas entre elles.

Selon une caractéristique de l'invention, une communauté fermée peut avoir une clé de cryptage dédiée, empêchant des produits d'une autre communauté de comprendre les données radio échangées.

Selon une caractéristique de l'invention, le bâtiment ou le regroupement de bâtiments comprend en outre une unité de gestion externe configurée pour transmettre au porte-parole des consignes de contrôle.

Selon une caractéristique de l'invention, le bâtiment ou le regroupement de bâtiments comprend en outre un serveur externe configuré pour être relié à au moins un produit.

Selon une caractéristique de l'invention, chaque produit intègre en outre une mémoire vive et une mémoire programme, les données d'identifiants étant enregistrées dans la mémoire vive.

Selon une caractéristique de l'invention, chaque produit comporte un identifiant propre et unique.

Selon une caractéristique de l'invention, le protocole de communication radio par lequel les données radio sont transmises peut être par exemple le protocole 868Mhz EnOcean ou tout autre protocole radio, par exemple les protocoles radio par télégrammes.

Optionnellement, tous les produits de la pluralité de produits sont identiques. Ainsi, chaque produit reproduit dans son périmètre de réception les étapes du procédé selon l'invention.

Optionnellement, les produits peuvent avoir un périmètre de détection différent.

Optionnellement, les produits présentent une portée de détection et/ou d'émission variable et paramétrable depuis l'unité de gestion.

Selon une caractéristique de l'invention, la communication dans le réseau de la pluralité de produits peut être unidirectionnelle ou bidirectionnelle, c'est-à-dire que les produits peuvent soit uniquement envoyer leurs informations à la pluralité de produits afin d'être collectées et renvoyées par le produit porte-parole, ou bidirectionnelle, c'est-à-dire que le produit porte-parole peut envoyer une information à un ou à tous les membres de la pluralité.

Selon une caractéristique de l'invention, il est possible de générer une anonymisation des données collectées par les produits et/ou le produit porte-parole, afin qu'il soit impossible de savoir quel produit a envoyé une donnée radio. Cela peut par exemple permettre une conformité avec notamment le Règlement (UE) 2016/679 du Parlement européen et du Conseil du 27 avril 2016 relatif à la protection des personnes physiques à l'égard du traitement des données à caractère personnel et à la libre circulation de ces données.

Selon une caractéristique de l'invention, il est possible que les produits de la pluralité envoient des informations à un produit de la communauté afin que celui-ci puisse agir. Cela peut être par exemple pour la gestion d'une chaufferie collective. De cette façon, il est possible d'informer le système de gestion de la chaufferie des besoins à venir en termes de calories.

Selon une caractéristique de l'invention, chaque produit peut être un ensemble de contacteur, tel que celui commercialisé sous le nom « Ecotouch® » par la société OGGA, et correspondant aux brevets FR3021751B1 et EP3149824B1.

### Brève description des figures

[Fig. 1] est un schéma du procédé de communication selon l'invention.
[Fig. 2] est un détail du procédé de communication schématisé en figure 1.
[Fig. 3] est un autre détail du procédé de communication schématisé en figure 1.
[Fig. 4] est un exemple de réseau de communication établi par le procédé de communication selon l'invention.
[Fig. 5] est un exemple d'utilisation du réseau de communication représenté en figure 4.
[Fig. 6] illustre le regroupement en communauté des produits d'une pluralité de réseaux de communications établis selon le procédé de communication selon l'invention.

### Description détaillée des figures

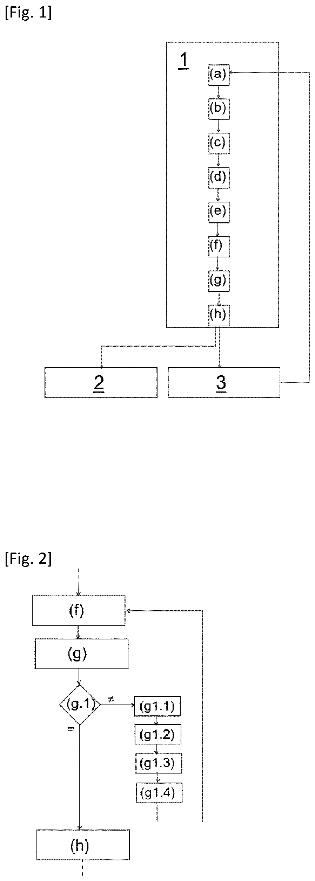

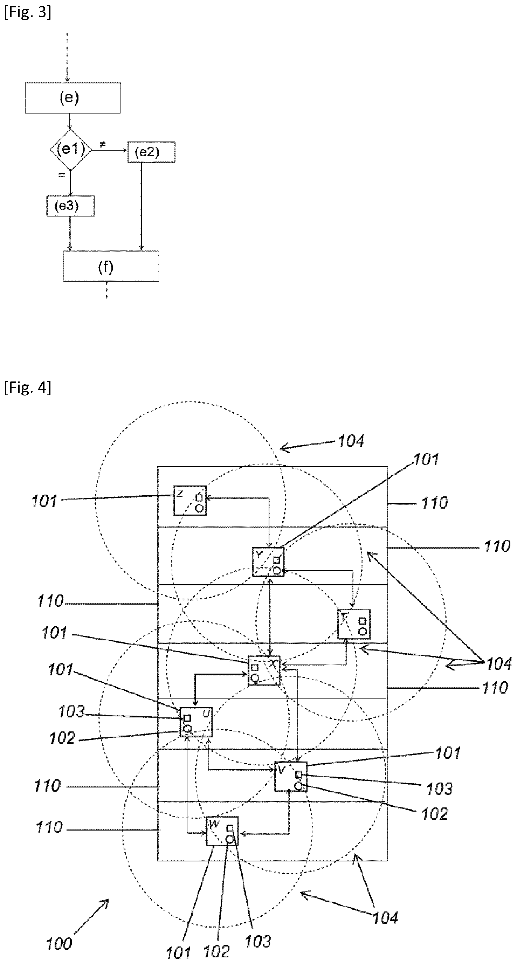

Le procédé de communication selon l'invention est illustré aux figures 1 à 3. En particulier, le procédé de communication est réalisé au sein d'un réseau de communication dynamique entre une pluralité de produits 101 d'un même bâtiment ou d'un même regroupement de bâtiment 100, comme illustré aux figures 4 à 6.

Comme on peut le voir notamment figure 4, un bâtiment 100 comprend plusieurs étages 110 dans lesquels une pluralité de produits 101 sont installés. Selon l'invention, le bâtiment 100 ou le regroupement de bâtiments comprend en outre une unité de gestion externe 106 et un serveur externe 105. L'unité de gestion externe 106 et le serveur externe 105 sont connectés à un produit 101 qui du fait d'être connecté avec le serveur externe 104 devient porte-parole P des autres produits 101 de la pluralité. Bien entendu, il est possible que plusieurs produits 101 soient connectés à l'unité de gestion externe 106 et/ou au serveur 105.

Selon l'invention, chaque produit 101 comprend au moins un module radio 102 et un processeur de traitement 103. Le module radio 102 est configuré pour émettre et recevoir des données radio incluant au moins une donnée d'identifiant propre et unique et au moins une donnée sur la qualité du signal radio, le module radio étant configuré pour émettre et recevoir lesdites données radio uniquement dans un périmètre de réception 104, comme illustré en figure 4.

Le procédé de communication selon l'invention va maintenant être décrit en référence aux figures 1 à 5.

Le procédé de communication comprend une étape 1 d'établissement du réseau de communication qui est réalisée automatiquement. Pour l'explication du procédé de communication nous prendrons l'exemple d'un seul produit parmi la pluralité, sachant que tous les produits de la pluralité sont identiques et que de ce fait, ce que fait le produit choisi est également fait par la pluralité de produits en parallèle.

Dans une première sous-étape (a) de l'étape 1, chaque module radio 102 de chaque produit 101 nommé sur la figure 4 Z, Y, T, X, U, V et W émet des données radio.

Puis, dans une sous-étape (b) le module radio 102 d'un premier produit, par exemple le produit V, détecte des données radio émises en étape (a) dans son périmètre de réception 104 et les reçoit.

En sous-étape (c), le processeur de traitement 103 du produit V analyse les données radio reçues en étape (b).

Puis en sous-étape (d), le processeur de traitement 103 du produit V sélectionne un produit, le produit X, parmi la pluralité de produits émetteurs. Cette sélection est réalisée sur la base de l'analyse de la donnée de qualité du signal de chaque produit émetteur, le produit sélectionné, en l'espèce le produit X, étant considéré comme le produit le plus éloigné c'est-à-dire les produits dont la qualité de réception du signal est la plus faible par rapport à toutes les données de qualité de signal des autres produits émetteurs.

Dans une sous-étape (e), le module radio 102 du produit V transmet au produit X les données d'identifiants issues des données radio reçues en sous-étape (b).

En réponse, selon une première configuration du procédé, le module radio 102 du produit X envoie au produit V la totalité des données d'identifiants issues de données radio qui l'a lui-même détectées et reçues dans son périmètre de réception 104 de la part des produits de la pluralité et dans une étape (g) le module radio du produit V reçoit des données radio envoyées en étape (f).

En variante, selon une deuxième configuration du procédé et comme illustré en figure 3, en réponse, le module radio 102 du produit X envoie une partie des données d'identifiants issues de données radio qui l'a lui-même détectées et reçues dans son périmètre de réception 104 de la part des produits de la pluralité. Plus particulièrement, dans une sous-étape (e1), le processeur de traitement 103 du produit X compare les données d'identifiants transmises en étape (e) avec les données d'identifiants récoltées issues de données radio que le module radio 102 du produit X a lui-même détectées et reçues dans son périmètre de réception 104 de la part de produits de la pluralité :
- si les données d'identifiants reçues en étape (e) sont identiques aux données d'identifiants issues de données radio dans le périmètre de réception 104 du produit X alors, dans une étape (e2) le produit X envoie la totalité des données d'identifiants issues de données radio dans son périmètre de réception 104,
- si les données d'identifiants reçues en étape (e) sont différentes des données d'identifiants issues de données radio dans le périmètre de réception 104 du produit X alors, dans une étape (e3), le processeur de traitement 103 du produit X identifie les données d'identifiants inconnues du produit V parmi les données d'identifiants issues de données radio détectées dans son périmètre 104 et dans l'étape (g) le module radio du produit V reçoit la totalité des données radio envoyées en étape (f).

Selon l'invention, le procédé comprend une étape (g1) réalisée après l'étape (g) dans laquelle le processeur de traitement 103 du produit V compare les données d'identifiants reçues en étape (g) avec les données d'identifiants issues des données radio reçues en étape (b) :
- si les données d'identifiants reçues en étape (g) sont identiques aux données d'identifiants reçues en étape (b) alors le produit V a connaissance de l'ensemble des produits 101 du bâtiment ou du regroupement de bâtiment 100 et le réseau de communication est établi (étape (h)),
- si les données d'identifiants reçues en étape (g) sont différentes des données d'identifiants reçues en étape (b) alors :
   (g1.1) le produit V enregistre les données d'identifiants différentes,
   (g1.2) le processeur de traitement 103 du produit V crée une liste de nouvelles données d'identifiants, dites données d'identifiants n+1, à partir des données d'identifiants reçues en étape (b), dites données d'identifiants n, et des données d'identifiants reçues en étape (g),
   (g1.3) le module radio 102 du produit V transmet au produit X les données d'identifiants n+1,
   (g1.4) réitération des sous-étapes (f), (g), (g1), (g1.1), (g1.2), (g1.3), (g1.4) tant que les données d'identifiants reçues en étape (g) sont différentes des données d'identifiants reçues en sous-étape (b).

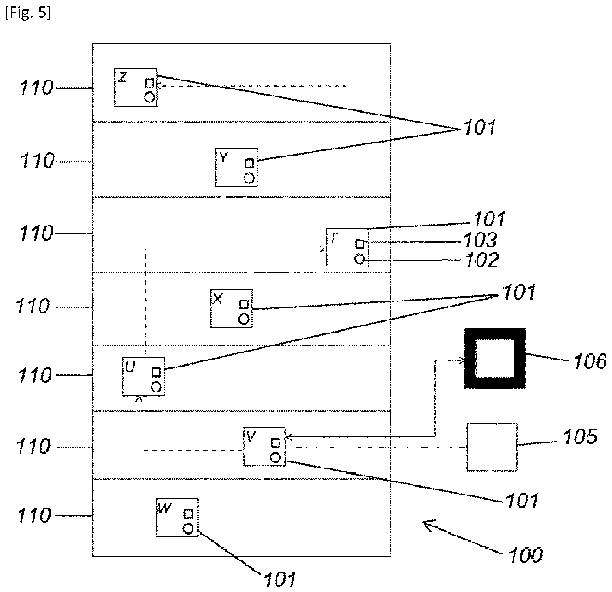

Une fois le réseau de communication établi, en étape (h), le réseau de communication peut être utilisé comme illustré en figure 5 par exemple, dans une étape 2 d'utilisation du réseau. En parallèle, dans une étape 3, l'établissement du réseau de communication est mis à jour à intervalles réguliers de manière à ce que le réseau soit dynamique et actualisé régulièrement pour intégrer des nouveaux produits au réseau et/ou détecter le retrait de produits du réseau et détecter les pannes éventuelles de certains produits.

En figure 5 est illustré un exemple d'utilisation du réseau de communication dynamique dans lequel le produit V veut envoyer une consigne ou une information au produit Z. Pour ce faire, il passe le relai par le produit U qui lui-même relaie l'information au produit T qui lui-même relaie l'information au produit Z. Grâce à l'établissement du réseau tel que décrit, chaque produit connaît le chemin le plus court pour atteindre un autre produit et communiquer avec lui.

En outre, comme on peut le voir en figure 5, le produit V est relié à un serveur 105 et à une unité de gestion 106 externe. Le produit V étant le seul produit de la pluralité à être relié à un serveur externe 105, il devient alors porte-parole de la pluralité et c'est par lui que transite les informations venant de l'extérieur et en particulier de l'unité de gestion ou bien des informations destinées à être transmises à l'extérieur du réseau de communication.

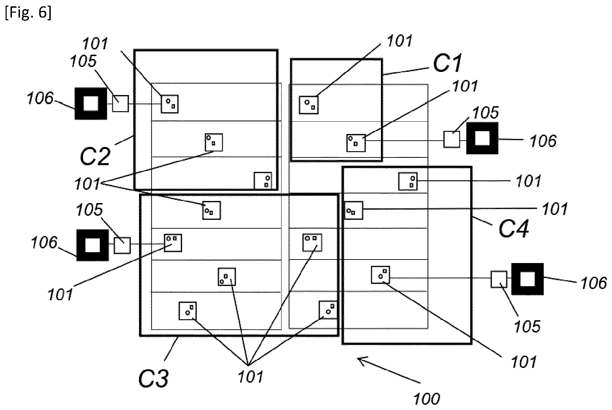

En Figure 6, les produits 101 de la pluralité sont regroupés en pluralité de communautés C1, C2, C3, C4 de produits, chaque produit de la communauté étant intégré au réseau de communication selon l'invention, et chaque produit de la communauté étant configuré pour communiquer entre eux par le procédé de communication selon l'invention. Selon l'invention, Les communautés C1, C2, C3, C4 peuvent être fermées c'est-à-dire que les données radio transmises ne sont prises en compte que par les produits d'une même communauté. Par exemple, deux bâtiments voisins peuvent avoir deux communautés distinctes qui ne communiquent pas entre elles par exemple la communauté C2 ne communique pas avec la communauté C4. En outre des communautés peuvent regrouper des produits de différents bâtiments, c'est le cas de la communauté C3 dans l'exemple illustré en figure 6.

Bien entendu, l'invention n'est pas limitée aux modes de réalisation décrits et représentés aux figures annexées. Des modifications restent possibles, notamment du point de vue de la constitution des divers éléments ou par substitution d'équivalents techniques, sans sortir pour autant du domaine de protection de l'invention telle que définie dans les revendications annexées.

## Revendications

1. Procédé de communication au sein d'un réseau de communication dynamique entre une pluralité de produits (101) d'un même bâtiment (100) ou d'un même regroupement de bâtiments, **caractérisé en ce que** chaque produit (101) comprenant au moins un module radio (102), un processeur de traitement (103), le module radio (102) étant configuré pour émettre et recevoir des données radio incluant au moins une donnée d'identifiant et au moins une donnée sur la qualité du signal radio, le module radio (102) étant configuré pour émettre et recevoir lesdites données radio uniquement dans un périmètre de réception (104),
le procédé comprenant au moins une étape d'établissement du réseau de communication dynamique entre la pluralité de produits (101), l'étape d'établissement du réseau de communication étant réalisée automatiquement et comprenant les sous-étapes suivantes :
(a) chaque module radio (102) de chaque produit (101) de la pluralité de produits (101) émet des données radio,
(b) le module radio (102) d'un premier produit (101) détecte des données radio émises en étape (a) dans le périmètre de réception (104) du premier produit (101) et les reçoit,
(c) le processeur de traitement (103) du premier produit (101) analyse les données radio reçues en étape (b),
**caractérisé en ce qu'**il comprend les sous-étapes suivantes :
(d) le processeur de traitement (103) du premier produit (101) sélectionne un produit (101) parmi la pluralité de produits (101) émetteurs dont les données radio émises en étape (a) ont été reçues par le premier produit (101) en étape (b), le produit (101) sélectionné étant sélectionné sur la base de l'analyse de la donnée de qualité du signal réalisée en étape (c), ledit produit (101) sélectionné étant considéré comme le produit (101) le plus éloigné c'est-à-dire le produit (101) dont la qualité de réception du signal est la plus faible par rapport à toutes les données de qualité de signal reçues en étape (b) par le premier produit (101),
(e) le module radio (102) du premier produit (101) transmet au produit (101) le plus éloigné sélectionné en étape (d) les données d'identifiants issues des données radio reçues en étape (b),
(f) en réponse, le module radio (102) du produit (101) le plus éloigné envoie au premier produit (101) des données d'identifiants issues de données radio qui l'a lui-même détectées et reçues dans son périmètre de réception (104) de la part de produits (101) de la pluralité,
(g) le module radio (102) du premier produit (101) reçoit des données radio envoyées en étape (f),
(h) établissement du réseau de communication entre tous les produits du bâtiment (100) ou du regroupement de bâtiment.

2. Procédé de communication selon la revendication 1, dans lequel le procédé comprend en outre une étape de communication dans laquelle un ou plusieurs produits (101) communiquent entre eux via le réseau de communication établi lors de l'étape d'établissement de réseau.

3. Procédé de communication selon la revendication 1 ou 2, dans lequel dans l'étape (f) le produit (101) le plus éloigné envoie la totalité des données d'identifiants issues de données radio qui l'a lui-même détectées et reçues dans son périmètre de réception (104) de la part de produits (101) de la pluralité et dans l'étape (g) le module radio (102) du premier produit (101) reçoit la totalité des données radio envoyées en étape (f).

4. Procédé de communication selon la revendication 1 ou 2, dans lequel dans l'étape (f) le produit (101) le plus éloigné envoie une partie des données d'identifiants issues de données radio qui l'a lui-même détectées et reçues dans son périmètre de réception (104) de la part de produits (101) de la pluralité et dans l'étape (g) le module radio (102) du premier produit (101) reçoit la totalité des données radio envoyées en étape (f).

5. Procédé de communication selon l'une quelconque des revendications 1 à 4, dans lequel le procédé comprend une étape (g1) réalisée entre l'étape (g) et l'étape (h) dans laquelle le processeur de traitement (103) du premier produit (101) compare les données d'identifiants reçues en étape (g) avec les données d'identifiants issues des données radio reçues en étape (b) :
- si les données d'identifiants reçues en étape (g) sont identiques aux données d'identifiants reçues en étape (b) alors le premier produit (101) a connaissance de l'ensemble des produits (101) du bâtiment (100) ou du regroupement de bâtiment et le réseau de communication est établi (étape (h)),
- si les données d'identifiants reçues en étape (g) sont différentes des données d'identifiants reçues en étape (b) alors :
(g1.1) le premier produit (101) enregistre les données d'identifiants différentes,
(g1.2) le processeur de traitement (103) du premier produit (101) crée une liste de nouvelles données d'identifiants, dites données d'identifiants n+1, à partir des données d'identifiants reçues en étape (b), dites données d'identifiants n, et des données d'identifiants reçues en étape (g),
(g1.3) le module radio (102) du premier produit (101) transmet au produit (101) le plus éloigné les données d'identifiants n+1,
(g1.4) réitération des étapes (f), (g), (g1), (g1.1), (g1.2), (g1.3), (g1.4) tant que les données d'identifiants reçues en étape (g) sont différentes des données d'identifiants reçues en étape (b).

6. Procédé de communication selon l'une quelconque des revendications 1 à 5, dans lequel le procédé de communication comprend en outre une étape de mise à jour de l'étape de l'établissement par réitération des sous-étapes (a) à (h).

7. Procédé de communication selon l'une quelconque des revendications 1 à 6, dans lequel lorsqu'un produit (101) parmi la pluralité de produits (101), par exemple le premier produit (101), est connecté à un réseau externe identifié et autorisé, par exemple à internet, le produit (101) connecté devient porte-parole des autres produits (101) de la pluralité.

8. Procédé de communication selon la revendication 7, dans lequel il y a autant de produit (101) porte-parole que de produits (101) dans la pluralité.

9. Procédé de communication selon la revendication 7, dans lequel la pluralité de produits (101) comprend un seul et unique produit (101) porte-parole.

10. Procédé de communication selon l'une quelconque des revendications 1 à 9, dans lequel les produits (101) peuvent diffuser des données radio dédiées aux autres produits (101) de la pluralité.

11. Procédé de communication selon l'une quelconque des revendications 1 à 10, dans lequel un produit de la pluralité peut diffuser une donnée radio à destination d'un seul des autres produits.

12. Procédé de communication selon l'une quelconque des revendications 1 à 11, dans lequel la communication entre les produits de la pluralité peut être cryptée.

## Patentansprüche

1. Kommunikationsverfahren innerhalb eines dynamischen Kommunikationsnetzwerks zwischen einer Vielzahl von Produkten (101) eines selben Gebäudes (100) oder eines selben Zusammenschlusses von Gebäuden, **dadurch gekennzeichnet, dass** jedes Produkt (101), das mindestens ein Funkmodul (102), einen Bearbeitungsprozessor (103) umfasst, wobei das Funkmodul (102) konfiguriert ist, um Funkdaten zu senden und zu empfangen, die mindestens ein Kennungsdatum und mindestens ein Datum über die Qualität des Funksignals beinhalten, wobei das Funkmodul (102) konfiguriert ist, um die Funkdaten nur in einer Empfangsreichweite (104) zu senden und zu empfangen,
wobei das Verfahren mindestens einen Schritt des Erstellens des dynamischen Kommunikationsnetzwerks zwischen der Vielzahl von Produkten (101) umfasst, wobei der Schritt des Erstellens des dynamischen Kommunikationsnetzwerks automatisch realisiert wird und die folgenden Unterschritte umfasst:
(a) jedes Funkmodul (102) eines jeden Produkts (101) der Vielzahl von Produkten (101) sendet Funkdaten,
(b) das Funkmodul (102) eines ersten Produkts (101) erkennt Funkdaten, die in Schritt (a) gesendet wurden, in der Empfangsreichweite (104) des ersten Produkts (101) und empfängt diese,
(c) der Bearbeitungsprozessor (103) des ersten Produkts (101) analysiert die in Schritt (b) empfangenen Funkdaten,
**dadurch gekennzeichnet, dass** es die folgenden Unterschritte umfasst:
(d) der Bearbeitungsprozessor (103) des ersten Produkts (101) wählt ein Produkt (101) aus der Vielzahl von Senderprodukten (101) aus, dessen Funkdaten, die in Schritt (a) gesendet wurden, in Schritt (b) von dem ersten Produkt (101) empfangen wurden, wobei das ausgewählte Produkt (101) auf der Basis der Analyse des Qualitätsdatums des in Schritt (c) realisierten Signals ausgewählt wird, wobei das ausgewählte Produkt (101) als das am weitesten entfernte Produkt (101) angesehen wird, das heißt das Produkt (101), dessen Empfangsqualität des Signals in Bezug auf alle in Schritt (b) durch das erste Produkt (101) empfangenen Signalqualitätsdaten das schwächste ist,
(e) das Funkmodul (102) des ersten Produkts (101) überträgt an das in Schritt (b) ausgewählte am weitesten entfernte Produkt (101) die Kennungsdaten aus den in Schritt (b) empfangenen Funkdaten,
(f) als Reaktion sendet das Funkmodul (102) des am weitesten entfernten Produkts (101) an das erste Produkt (101) aus den Funkdaten stammende Kennungsdaten, die es selbst in seiner Empfangsreichweite (104) aus den Produkten (101) der Vielzahl erkannt und empfangen hat,
(g) das Funkmodul (102) des ersten Produkts (101) empfängt Funkdaten, die in Schritt (f) gesendet werden,
(h) Erstellen des Kommunikationsnetzwerks zwischen allen Produkten des Gebäudes (100) und des Gebäudezusammenschlusses.

2. Kommunikationsverfahren nach Anspruch 1, wobei das Verfahren weiter einen Kommunikationsschritt umfasst, in dem ein oder mehrere Produkte (101) untereinander über das beim Schritt des Erstellens eines Netzwerks erstellten Kommunikationsnetzwerk kommunizieren.

3. Kommunikationsverfahren nach Anspruch 1 oder 2, wobei im Schritt (f) das am weitesten entfernte Produkt (101) die Gesamtheit der aus den Funkdaten, die es selbst in seiner Empfangsreichweite (104) von Produkten (101) der Vielzahl erkannt und empfangen hat, stammenden Kennungsdaten sendet, und im Schritt (g) das Funkmodul (102) des ersten Produkts (101) die Gesamtheit der in Schritt (f) gesendeten Funkdaten empfängt.

4. Kommunikationsverfahren nach Anspruch 1 oder 2, wobei im Schritt (f) das am weitesten entfernte Produkt (101) einen Teil der aus den Funkdaten, die es selbst in seiner Empfangsreichweite (104) von Produkten (101) der Vielzahl erkannt und empfangen hat, stammenden Kennungsdaten sendet, und im Schritt (g) das Funkmodul (102) des ersten Produkts (101) die Gesamtheit der in Schritt (f) gesendeten Funkdaten empfängt.

5. Kommunikationsverfahren nach einem der Ansprüche 1 bis 4, wobei das Verfahren einen Schritt (g1) umfasst, der zwischen dem Schritt (g) und dem Schritt (h) realisiert wird, in dem der Bearbeitungsprozessor (103) des ersten Produkts (101) die in Schritt (g) empfangenen Kennungsdaten mit den Kennungsdaten vergleicht, die aus den in Schritt (b) empfangenen Funkdaten stammen:
- wenn die in Schritt (g) empfangenen Kennungsdaten identisch mit den in Schritt (b) empfangenen Kennungsdaten sind, weist das erste Produkt (101) somit Kenntnis über die Gesamtheit der Produkte (101) des Gebäudes oder des Gebäudezusammenschlusses auf, und das Kommunikationsnetzwerk wird erstellt (Schritt (h)),
- wenn sich die in Schritt (g) empfangenen Kennungsdaten von den in Schritt (b) empfangenen Kennungsdaten unterscheiden:
(g1.1) speichert das erste Produkt (101) die unterschiedlichen Kennungsdaten ab,
(g1.2) erstellt der Bearbeitungsprozessor (103) des ersten Produkts (101) eine Liste mit neuen Kennungsdaten, Kennungsdaten n+1 genannt, aus den in Schritt (b) empfangenen Kennungsdaten, Kennungsdaten n genannt, und den in Schritt (g) empfangenen Kennungsdaten,
(g1.3) das Funkmodul (102) des ersten Produkts (101) überträgt die Kennungsdaten n+1 an das am weitesten entfernte Produkt (101),
(g1.4) Wiederholung der Schritte (f), (g), (g1.1), (g1.2), (g1.3), (g1.4) solange sich die in Schritt (g) empfangenen Kennungsdaten von den in Schritt (b) empfangenen Kennungsdaten unterscheiden.

6. Kommunikationsverfahren nach einem der Ansprüche 1 bis 5, wobei das Kommunikationsverfahren weiter einen Aktualisierungsschritt des Schrittes des Erstellens durch Wiederholen der Unterschritte (a) bis (h) umfasst.

7. Kommunikationsverfahren nach einem der Ansprüche 1 bis 6, wobei, wenn ein Produkt (101) aus der Vielzahl von Produkten (101), beispielsweise das erste Produkt (101) mit einem identifizierten und zugelassenen externen Netzwerk, beispielsweise mit Internet verbunden ist, das verbundene Produkt (101) zum Sprecher der anderen Produkte (101) der Vielzahl wird.

8. Kommunikationsverfahren nach Anspruch 7, wobei es ebenso viele Sprecher-Produkte (101) wie Produkte (101) in der Vielzahl gibt.

9. Kommunikationsverfahren nach Anspruch 7, wobei die Vielzahl von Produkten (101) ein einziges Sprecher-Produkt (101) umfasst.

10. Kommunikationsverfahren nach einem der Ansprüche 1 bis 9, wobei die Produkte (101) Funkdaten ausstrahlen können, die den anderen Produkten (101) der Vielzahl gewidmet sind.

11. Kommunikationsverfahren nach einem der Ansprüche 1 bis 10, wobei ein Produkt der Vielzahl ein Funkdatum zu einem einzigen der anderen Produkte ausstrahlen kann.

12. Kommunikationsverfahren nach einem der Ansprüche 1 bis 11, wobei die Kommunikation zwischen den Produkten der Vielzahl verschlüsselt sein kann.

## Claims

1. A method for communicating within a dynamic communication network between a plurality of products (101) of a same building (100) or of a same group of buildings, **characterized in that** each product (101) comprising at least one radio module (102), a processing processor (103), the radio module (102) being configured to transmit and receive radio data including at least one identifier data and at least one data on the quality of the radio signal, the radio module (102) being configured to transmit and receive said radio data only within a reception perimeter (104),
the method comprising at least one step of establishing the dynamic communication network between the plurality of products (101), the step of establishing the communication network being performed automatically and comprising the following sub-steps:
(a) each radio module (102) of each product (101) of the plurality of products (101) transmits radio data,
(b) the radio module (102) of a first product (101) detects radio data transmitted in step (a) in the reception perimeter (104) of the first product (101) and receives them,
(c) the processing processor (103) of the first product (101) analyzes the radio data received in step (b),
**characterized in that** it comprises the following sub-steps:
(d) the processing processor (103) of the first product (101) selects a product (101) among the plurality of transmitting products (101) whose radio data transmitted in step (a) has been received by the first product (101) in step (b), the selected product (101) being selected on the basis of the analysis of the signal quality data carried out in step (c), said selected product (101) being considered as the most remote product (101), that is to say the product (101) whose signal reception quality is the lowest compared to all the signal quality data received in step (b) by the first product (101),
(e) the radio module (102) of the first product (101) transmits to the most remote product (101) selected in step (d) the identifier data resulting from the radio data received in step (b),
(f) in response, the radio module (102) of the most remote product (101) sends to the first product (101) identifier data originating from radio data which it has itself detected and received within its reception perimeter (104) from the plurality of products (101),
(g) the radio module (102) of the first product (101) receives radio data sent in step (f),
(h) establishment of the communication network between all building products (100) or the group of buildings.

2. The communication method according to claim 1, wherein the method further comprises a communication step in which one or more products (101) communicate with each other via the communication network established during the network establishment step.

3. The communication method according to claim 1 or 2, wherein in step (f) the most remote product (101) sends all of the identifier data from radio data which it has detected itself and received in its reception perimeter (104) from products (101) of the plurality and in step (g) the radio module (102) of the first product (101) receives all of the radio data sent in step (f).

4. The communication method according to claim 1 or 2, wherein in step (f) the most remote product (101) sends part of the identifier data from radio data which it has itself detected and received in its reception perimeter (104) from products (101) of the plurality and in step (g) the radio module (102) of the first product (101) receives all of the radio data sent in step (f).

5. The communication method according to any one of claims 1 to 4, wherein the method comprises a step (g1) performed between step (g) and step (h) in which the processing processor (103) of the first product (101) compares the identifier data received in step (g) with the identifier data resulting from the radio data received in step (b):
- if the identifier data received in step (g) are identical to the identifier data received in step (b) then the first product (101) is aware of all the products (101) of the building (100) or of the group of building and the communication network is established (step (h)),
- if the identifier data received in step (g) are different from the identifier data received in step (b) then:
(g1.1) the first product (101) records the different identifier data,
(g1.2) the processing processor (103) of the first product (101) creates a list of new identifier data, called identifier data n+1, from the identifier data received in step (b), called identifier data n, and identifier data received in step (g),
(g1.3) the radio module (102) of the first product (101) transmits to the most remote product (101) the identifier data n+1,
(g1.4) repeating steps (f), (g), (g1), (g1.1), (g1.2), (g1.3), (g1.4) as long as the identifier data received in step (g) are different from the identifier data received in step (b).

6. The communication method according to any one of claims 1 to 5, wherein the communication method further comprises a step of updating the establishing step by repeating the sub-steps (a) to (h).

7. The communication method according to any one of claims 1 to 6, wherein when a product (101) among the plurality of products (101), for example the first product (101), is connected to an identified and authorized external network, for example to the internet, the connected product (101) becomes a spokesperson for the other products (101) of the plurality.

8. The communication method according to claim 7, wherein there are as many spokesperson product (101) as there are products (101) in the plurality.

9. The communication method according to claim 7, wherein the plurality of products (101) comprises a single spokesperson product (101).

10. The communication method according to any one of claims 1 to 9, wherein the products (101) can broadcast radio data dedicated to the other products (101) of the plurality.

11. The communication method according to any one of claims 1 to 10, wherein one of products of the plurality can broadcast radio data to only one of the other products.

12. The communication method according to any one of claims 1 to 11, wherein the communication between the products of the plurality can be encrypted.
